# EUROPÄISCHE PATENTSCHRIFT

(11) **EP 3 587 087 B1**
(45) Veröffentlichungstag und Bekanntmachung des Hinweises auf die Patenterteilung: **20.01.2021**
(21) Anmeldenummer: 19180765.0
(22) Anmeldetag: 18.06.2019
(51) Int. Cl.: B29C 70/32, B29C 70/20, B29C 70/38, B29C 53/60, D02G 3/04, D02G 3/22, B29L 31/00

(54) **HERSTELLUNGSVERFAHREN FÜR EINEN FASERVERSTÄRKTEN BEHÄLTER**
MANUFACTURING METHOD FOR A FIBRE-REINFORCED CONTAINER
PROCÉDÉ DE FABRICATION D'UN RÉCIPIENT RENFORCÉ PAR DES FIBRES

(30) Priorität: 29.06.2018 DE 102018210788
(43) Veröffentlichungstag der Anmeldung: 01.01.2020
(73) Patentinhaber: Ford Global Technologies, LLC, Dearborn, MI 48126 (US)
(72) Erfinder: Hobein, Bert, 52076 Aachen (DE); Orozco, Julio, 52078 Aachen (DE); Veenstra, Mike J, Southgate, MI, 48195 (US); Papasavva, Stella, Royal Oak, MI 48073 (US)
(74) Vertreter: Dörfler, Thomas

(56) Entgegenhaltungen:
- WO-A1-2016/092270
- US-A1- 2005 260 373
- US-B2- 7 090 736

## Beschreibung

Die Erfindung betrifft ein Herstellungsverfahren für einen faserverstärkten Behälter mit den Merkmalen des Oberbegriffs des Anspruchs 1.

Faserverstärkte Druckbehälter werden im Automobilbereich verwendet, um bspw. Autogas, Erdgas oder Wasserstoff für Brennstoffzellen aufzunehmen. Dabei werden normalerweise hochwertige, hoch belastbare Fasern verwendet, um den auftretenden Arbeitsdrücken von bis zu 87,5 MPa zu widerstehen. Die derzeit hohen Kosten von carbonfaserverstärkten Druckbehältern, insbesondere für Wasserstoff-angetriebene Fahrzeuge sind durch das Carbonfaser-Material selbst bedingt und müssen für eine mögliche Markteinführung verringert werden. In Abhängigkeit von der Größe, welche im Wesentlichen die Reichweite des Fahrzeugs definiert, können die Kosten für einen Druckbehälter im Bereich von mehreren tausend Euro bzw. US-Dollar liegen.

Allgemein lassen sich Druckbehälter für gasbetriebene Fahrzeuge in 4 Typen einteilen. Der Druckbehälter weist dabei jeweils einen zylindrischen Mittelabschnitt auf, an den sich endseitig gewölbte oder domartige Endabschnitte anschließen. Typ 1 bezeichnet einen Druckbehälter, der ausschließlich aus Metall gefertigt ist, Typ 2 bezeichnet einen Druckbehälter, der aus Metall gefertigt und ausschließlich im zylindrischen Mittelabschnitt faserverstärkt ist, Typ 3 bezeichnet einen Druckbehälter, der einen Innenmantel aus Metall aufweist und der sowohl im Mittelabschnitt als auch in den Endabschnitten faserverstärkt ist, und Typ 4 bezeichnet einen Druckbehälter mit einem Innenmantel aus einem Polymer, der im Mittelabschnitt und in den Endabschnitten faserverstärkt ist und der endseitig metallischer Endstücke für ein Ventil bzw. einen Verschluss aufweist.

Bei der Herstellung des faserverstärkten Druckbehälters kommt normalerweise das Wickelverfahren zum Einsatz, bei welchem die Fasern in Form von Faserbündeln (Rovings), meist nach dem Tränken mit dem Matrixwerkstoff (z.B. einem Harz), unter einer definierten Fadenvorspannung auf dem rotierenden Innenmantel abgelegt werden. Dabei sind unterschiedliche Wickelwinkel bezüglich der Drehachse möglich, bspw. Umfangswicklungen, die nahezu senkrecht zur Drehachse verlaufen, oder sog. Kreuzlagenwicklungen, bei denen ein geringerer Wickelwinkel (bspw. 10° bis 60°) bezüglich der Drehachse vorliegt. Je nach Wickelwinkel erfahren die Fasern eine unterschiedliche Belastung bzw. können den Behälter unterschiedlich gut gegenüber auftretendem Innendruck in Umfang- bzw. Längsrichtung stabilisieren. Typischerweise werden während des Wickelns mehrere Umfangs- bzw. Kreuzlagen abwechselnd auf den rotierenden Innenmantel aufgebracht.

Ein Verfahren zur Herstellung eines fadengewickelten Druckbehälters ist in der US 7,090,736 B2 offenbart. Eine thermoplastische Auskleidung ist mit einem vermischten Vorgarn umwickelt, das thermoplastische und verstärkende Filamente enthält. Der gewickelte Tank ist teilweise mit einer Kühlflüssigkeit gefüllt, wobei der gewickelte Tank auf eine Temperatur erwärmt wird, die ausreicht, um einen Teil der Flüssigkeit zu verdampfen, wobei die Auskleidung bei einem vorgewählten eingestellten Druck unter Druck gesetzt wird, und ausreicht, um die thermoplastische Matrix zu verschmelzen, jedoch nicht ausreichend ist die Auskleidung signifikant zu erweichen.

In der US 2005/260373 A1 ist ein zusammengesetzter umhüllter Druckbehälter vorgesehen, der ein zusammengesetztes Umhüllungsmaterial enthält, das Fasern enthält, die in einer Harzmatrix angeordnet sind. Es werden mindestens erste und zweite Arten von Fasern verwendet. Diese Fasern weisen typischerweise Eigenschaften von hoher Festigkeit und hoher Zähigkeit auf, um Schlagfestigkeit mit erhöhter Druckbehandlungsfähigkeit und geringem Gewicht bereitzustellen. Die Fasern werden unter Verwendung von Wickel- oder Wickeltechniken mit Wicklungswinkeln, die für bestimmte Leistungsmerkmale variiert werden, aufgebracht, um einen Druckbehälter zu bilden. Die Fasern verschiedener Art sind in einer einzigen Wicklungsschicht verteilt oder in getrennten Schichten gewickelt. Gewebeschichten, die aus solchen Fasern bestehen, sind zwischen Wicklungen für zusätzliche Festigkeit oder Schlagfestigkeit vorgesehen. Die Gewichtsprozente der Materialien mit hoher Zähigkeit und hoher Festigkeit werden variiert, um spezifizierte Schlagzähigkeitseigenschaften bereitzustellen. Die Harzmatrix wird mit vorimprägnierten Fasern oder durch Nasswickeln gebildet.

Ein Verfahren und eine Vorrichtung zur Herstellung einer Verbundschicht eines flexiblen Rohrs sind in der WO 2016/092270 A1 offenbart.

Die US 7,641,949 B2 offenbart einen Druckbehälter mit einer Wandung, die einen Faserverbundstoff aufweist, mit wenigstens zwei unterschiedlichen Gruppen von Fasern unterschiedlicher Fasertypen, die miteinander gemischt werden. Eine Schicht der ersten und zweiten Gruppe wird als Kreuzlage und die andere Gruppe als Umfangslage aufgebracht.

Aus der US 5,385,263 A ist ein Zylindermodul für komprimiertes Gas bekannt. Dieses umfasst eine Mehrzahl von zylindrischen Behältern, von denen jeder eine Wandung mit gewickeltem Fasermaterial zur Verstärkung aufweist. Das Fasermaterial kann insbesondere eine innere Glasfaserschicht, eine mittlere Carbonfaserschicht und eine äußere Glasfaserschicht aufweisen, wobei die innere und die äußere Glasfaserschicht als Kreuzlage gewickelt sind und sich im Wesentlichen über den gesamten Behälter erstrecken, während die Carbonfaserschicht als Umfangslage gewickelt ist und sich auf einen zylindrischen Mittelabschnitt beschränkt, während kuppelartige Endabschnitte ausgespart sind.

Die US 2015/0001214 A1 offenbart ein hybrides Wicklungsverfahren für einen hybriden thermoplastischen Kunststoff-Endlosfaser-Verbundstoff. Dabei werden ein Carbonfaser-Verbundstoff und ein Glasfaser-Verbundstoff, die in Bandform geformt sind, zugeführt und gespannt. Weiterhin werden die hybriden Verbundstoffe um eine Außenumfangsfläche eines Dorns oder eines Liners gewickelt und Wärme wird auf diese aufgebracht.

Die US 4,699,288 A offenbart einen Hochdruckbehälter, mit einer inneren Schicht von Carbonfasern, die mit einem Harz imprägniert und gewickelt sind, und einer äußeren Schicht aus mit Harz imprägnierten Glas- und Polymerfasern, die um die innere Schicht gewickelt und an diese gebunden sind. Es können auch abwechselnd übereinander angeordnete Schichten mit Carbonfasern sowie Glas- und Polymerfasern vorgesehen sein. Auch können die Fasern in mehreren inneren Schichten als Kreuzlagen schraubenförmig entlang des gesamten Verhältnisses gewickelt sein, während die Fasern in mehreren äußeren Schichten als Umfangslagen und nur entlang eines mittleren zylindrischen Abschnitts gewickelt sind.

Die US 2016/0341359 A1 zeigt einen Druckbehälter, der eine Auskleidung aufweist, die einen Innenmantel des Druckbehälter bildet und einen zylindrischen Abschnitt und Domabschnitte, welche ausgehend von jeweiligen Enden des zylindrischen Abschnitts erweitert sind, umfasst. Weiterhin weist der Behälter eine Verstärkungsschicht auf, die durch Wickeln einer Faser auf eine Außenfläche der Auskleidung ausgebildet ist, wobei zumindest einer der Domabschnitte derart ausgebildet ist, dass er eine vorbestimmte gekrümmte Gestalt besitzt, die von einer isotonischen Kurve abweicht und bei einem Wicklungsvorgang der Faser auf dem Domabschnitt durch Kreuzlagen eine isotonische Kurve bildet.

US 8,727,174 B2 offenbart ein Herstellungsverfahren für einen Behälter. Dabei werden Fasern um den Außenumfang einer Auskleidung in der Mitte des Behälters gewickelt, bei einem Wickelwinkel zwischen 0° und 30° in Bezug auf eine Behälterachse, um eine Axialfaserlage zu erzeugen. Weiterhin werden die Fasern bei einem Wickelwinkel zwischen 30° und 90° in Bezug auf die Behälterachse gewickelt, um eine Umfangsfaserlage zu erzeugen. Hierdurch wird eine Lage faserverstärkten Kunststoffs erzeugt, wobei die Umfangsfaserlage so ausgebildet ist, dass umgeschlagene Faserenden der Umfangsfaserlage in einer Axialrichtung des Behälters eine Spur zeichnen, die sich von innen in Richtung nach außen, die Axialfaserlage und die Umfangsfaserlage umfassend, in einer Laminierrichtung der Faserlagen verjüngt.

Angesichts des aufgezeigten Standes der Technik bietet die Herstellung eines Behälters, insbesondere eines Hochdruckbehälters, der einen Innenmantel sowie einen Außenmantel aus Faserverbundstoff aufweist, noch Raum für Verbesserungen. Insbesondere wäre es wünschenswert, die Herstellungskosten zu reduzieren, ohne dass sich dies nachteilig auf die mechanischen Eigenschaften auswirkt.

Der Erfindung liegt die Aufgabe zugrunde, eine kostengünstige Herstellung eines faserverstärkten Behälters zu ermöglichen.

Erfindungsgemäß wird die Aufgabe durch ein Herstellungsverfahren mit den Merkmalen des Anspruchs 1 gelöst, wobei die Unteransprüche vorteilhafte Ausgestaltungen der Erfindung betreffen.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Durch die Erfindung wird ein Herstellungsverfahren für einen faserverstärkten Behälter, insbesondere für einen Hochdruckbehälter bereitgestellt. Dieser kann insbesondere als Gasbehälter für ein Kraftfahrzeug vorgesehen sein. Er kann dabei bspw. zur Aufnahme von Wasserstoff oder Erdgas vorgesehen sein.

Bei dem Herstellungsverfahren wird zunächst ein Innenmantel des Behälters bereitgestellt. Dieser Innenmantel, der auch als Innenwandung oder Liner bezeichnet werden kann, grenzt im fertigen Zustand normalerweise unmittelbar an den Innenraum des Behälters, in dem bspw. der Wasserstoff aufgenommen ist. Der Innenmantel dient normalerweise dazu, eine ausreichende Dichtheit gegenüber dem Gas zu gewährleisten, während seine mechanische Stabilität vergleichsweise gering sein kann. Er kann bspw. aus einem Polymer oder aus einem Metall bestehen. Durch die Form des Innenmantels wird innerhalb gewisser Grenzen auch die äußere Form des Behälters bestimmt. Bevorzugt kann der Innenmantel einen zylindrischen Mittelabschnitt aufweisen, an denen sich Endabschnitte anschließen, die gewölbt bzw. domartig ausgebildet sein können.

Nach dem Bereitstellen des Innenmantels erfolgt ein Zuführen und Aufwickeln wenigstens eines Rovings auf den Innenmantel. Bei dem Roving handelt es sich in bekannter Weise um ein Bündel aus Endlosfasern, bspw. Carbonfasern, Glasfasern, Aramidfasern etc. oder auch Gemische unterschiedlicher Fasern. Art, Stärke und Anzahl der Fasern innerhalb des Rovings können im Rahmen der vorliegenden Erfindung unterschiedlich gewählt werden. Das erfindungsgemäße Herstellungsverfahren kann auch als Wickelverfahren bezeichnet werden, da der Roving auf den Innenmantel aufgewickelt wird. "Auf den Innenmantel" beinhaltet hierbei auch die Möglichkeit, dass wenigstens Teile des Rovings nur mittelbar auf den Innenmantel aufgewickelt werden, wobei ein unmittelbares Aufwickeln auf andere, zuvor aufgewickelte Teile desselben Rovings oder auf einen anderen Roving erfolgen kann. Normalerweise rotiert der Innenmantel während des Aufwickelns, während der Roving bspw. durch ein Fadenauge geführt und somit definiert zugeführt wird. Der Innenmantel ist normalerweise wenigstens annähernd rotationssymmetrisch zu der Achse, um die er rotiert. Die Zuführung des Rovings erfolgt dabei normalerweise unter Zugspannung. Sofern der oben genannte Aufbau mit einem zylindrischen Mittelabschnitt und Endabschnitten vorliegt, wird der wenigstens eine Roving bevorzugt sowohl auf den Mittelabschnitt als auch auf die Endabschnitte aufgewickelt, was einem Druckbehälter vom Typ 3 oder vom Typ 4 entspricht.

Es werden aufeinander folgend wenigstens zwei Rovingabschnitte mit unterschiedlichen mechanischen Eigenschaften aufgewickelt. Die unterschiedlichen mechanischen Eigenschaften können dabei bspw. auf der Zusammensetzung, der Anzahl und/oder der Dimensionierung der Fasern innerhalb des jeweiligen Rovingabschnitts beruhen. In der Regel bedingen unterschiedliche mechanische Eigenschaften auch unterschiedliche Kosten, so dass bspw. mechanisch belastbare Rovings bzw. Rovingabschnitte mit höheren Kosten verbunden sind. Die wenigstens zwei Rovingabschnitte mit unterschiedlichen mechanischen Eigenschaften werden aufeinander folgend aufgewickelt, was bedeutet, dass zunächst ein Rovingabschnitt auf den Innenmantel aufgewickelt wird und danach ein anderer Rovingabschnitt.

Nach dem Aufwickeln des wenigstens einen Rovings auf den Innenmantel erfolgt ein Anbinden des wenigstens einen Rovings an den Innenmantel zur Herstellung eines Außenmantels aus Faserverbundstoff. Das Anbinden erfolgt normalerweise durch Stoffschluss mittels eines Bindemittels, bspw. eines Harzes, das die Matrix des Faserverbundstoffs darstellt. Der wenigstens eine Roving bildet eine oder mehrere Schichten aus Fasern auf dem Innenmantel, die zusammen mit der Matrix einen verstärkenden Außenmantel aus Faserverbundstoff bilden. Dieser Außenmantel ist im Allgemeinen maßgeblich für eine Verbesserung der mechanischen Eigenschaften des gesamten Behälters verantwortlich. Aus diesem Grund kann ein mechanisch vergleichsweise schwach ausgebildeter Innenmantel verwendet werden, der durch den Verbund mit dem Außenmantel die notwendige mechanische Stabilität erhält, um bspw. auch unter hohem Druck stehende Gase aufzunehmen.

Erfindungsgemäß werden wenigstens zwei Rovingabschnitte als aufeinander folgende, miteinander verbundene Teile eines Rovings aufgewickelt. D.h., der entsprechende Roving ist der Länge nach nicht homogen ausgebildet, sondern er weist wenigstens die genannten zwei Rovingabschnitte auf, die sich hinsichtlich ihrer mechanischen Eigenschaften unterscheiden. Somit kann beim erfindungsgemäßen Herstellungsverfahren ein kontinuierliches Aufwickeln entsprechend einem vorgesehenen Muster erfolgen, wobei ab einem bestimmten Punkt aufgrund der Verbindung der wenigstens zwei unterschiedlichen Rovingabschnitte ein Material mit andersartigen mechanischen Eigenschaften aufgewickelt wird. Es entfällt die Notwendigkeit, einen zwischenzeitlichen Wechsel des Rovings durchzuführen, was eine erhebliche Komplizierung sowie eine zeitliche Unterbrechung des Wickelprozesses bedeuten würde. Somit können Zeit und Herstellungskosten eingespart werden. Des Weiteren können durch die Verwendung von Rovingabschnitten mit unterschiedlichen mechanischen Eigenschaften Kosten eingespart werden, da es möglich ist, bspw. besonders belastbare, hochwertige Fasern nur dort einzusetzen, wo dies unter mechanischen Gesichtspunkten notwendig ist, während in anderen Bereichen weniger belastbare, kostengünstige Fasern eingesetzt werden können.

Da normalerweise vorgesehen ist, dass ein bestimmter Rovingabschnitt entsprechend einem bestimmten Wickelmuster auf einem bestimmten Teil des Innenmantels aufgewickelt wird, müssen Länge und Abfolge der wenigstens zwei (ggf. auch mehr) Rovingabschnitte innerhalb des Rovings an den vorgesehenen Ablauf des Aufwickelns angepasst sein. D.h., es wird normalerweise ein sozusagen "maßgeschneiderter" Roving bereitgestellt, der an den Wickelprozess für einen bestimmten Behälter angepasst ist.

Bevorzugt wird der wenigstens eine Roving vor dem Aufwickeln mit einem Bindemittel getränkt, wobei das Anbinden an den Innenmantel durch Aushärten des Bindemittels erfolgt. Bei dem Bindemittel handelt es sich normalerweise um ein Harz, das typischerweise thermisch ausgehärtet werden kann. Das Tränken mit dem Bindemittel erfolgt bevorzugt dadurch, dass der Roving der Länge nach durch ein Bad des Bindemittels geführt bzw. gezogen wird. Es versteht sich, dass dabei das Tränken der wenigstens zwei unterschiedlichen Rovingabschnitte ebenfalls kontinuierlich nacheinander und ohne Unterbrechung erfolgt.

Bevorzugt weisen wenigstens zwei Rovingabschnitte unterschiedliche Zugeigenschaften auf. Dies kann sich auf jegliche Eigenschaften beziehen, die das Verhalten des entsprechenden Rovingabschnitts unter Zugbelastung beschreiben. Insbesondere kann es sich hierbei um die Zugfestigkeit, die Streckgrenze und/oder den Elastizitätsmodul handeln. Wie bereits oben hinsichtlich der allgemeinen mechanischen Eigenschaften ausgeführt, können auch die unterschiedlichen Zugeigenschaften sowohl auf der Zusammensetzung der Fasern, deren Anzahl und/oder deren Abmessungen beruhen.

Bevorzugt werden wenigstens zwei Rovingabschnitte derart aufgewickelt, dass ihre Wickelwinkel wenigstens überwiegend voneinander getrennten Winkelbereichen entsprechen. Beim Aufwickeln kann jedem Rovingabschnitt ein (ggf. veränderlicher) Wickelwinkel zugeordnet werden, der dem Winkel zwischen dem (tangentialen) Verlauf des Rovingabschnitts und der Wickelachse entspricht, wobei letztere im Allgemeinen mit einer Symmetrieachse des Behälters bzw. des Innenmantels identisch ist. Hier und im Folgenden wird nicht zwischen positiven und negativen Wickelwinkel unterschieden, d.h. es wird streng genommen der Betrag des Wickelwinkels betrachtet. Bei dieser Ausgestaltung des Verfahrens wird ein erster Rovingabschnitt mit einem Wickelwinkel aufgewickelt, der einem ersten Winkelbereich entspricht, welcher von einem zweiten Winkelbereich eines Wickelwinkels getrennt ist, mit dem ein zweiter Rovingabschnitt aufgewickelt wird. Anders ausgedrückt, die beiden Winkelbereiche haben keine Überschneidung. Wenigstens überwiegend ist also der Wickelwinkel des einen Rovingabschnitts stets größer (oder stets kleiner) als der Wickelwinkel des anderen Rovingabschnitts. Da der jeweilige Rovingabschnitt bestimmte mechanische Eigenschaften aufweist, die ihn von wenigstens einem anderen Rovingabschnitt unterscheiden, kann man auch davon sprechen, dass die mechanischen Eigenschaften und der Wickelwinkel aufeinander abgestimmt sind. Dies ist insofern bedeutsam, da je nach Wickelwinkel eine unterschiedliche Belastung des Rovingabschnitts bzw. der Fasern desselben gegeben ist.

Insbesondere kann wenigstens ein erster Rovingabschnitt mit geringerer Zugfestigkeit wenigstens überwiegend als Kreuzlage gewickelt werden, während wenigstens ein zweiter Rovingabschnitt mit höherer Zugfestigkeit wenigstens überwiegend als Umfangslage gewickelt wird. Dabei bezeichnet eine Kreuzlage eine solche Wicklung, bei der der (tangentiale) Verlauf des Rovings schräg zur Wickelachse verläuft, wobei der Wickelwinkel im zylindrischen Teil des Behälters bspw. zwischen 10° und 70°, oder zwischen 30° und 60° liegen kann. D.h., der Verlauf des Rovings entspricht einer (deutlich ausgeprägten) Schraubenlinie um die Wickelachse. Als Umfangslage wird eine Wicklung im zylindrischen Teil des Behälters bezeichnet, bei der der Verlauf des Rovings zur Wickelachse nahezu rechtwinklig ist, also bspw. mit einem Wickelwinkel zwischen 80° und 90°. Da im Allgemeinen auch hier der Verlauf des Rovings einer Schraubenlinie mit allerdings sehr geringer Steigung entspricht, könnte man die Wicklung auch als ringartig oder ringähnlich bezeichnen. Derartige Wicklungen werden auch als Umfangswicklung bezeichnet. Bei auftretendem Innendruck erfahren insbesondere ringförmig aufgewickelte Fasern eine erhöhte Zugbelastung, weshalb es sinnvoll ist, für diese Wicklungen einen Rovingabschnitt mit erhöhter Zugfestigkeit zu verwenden, während für die schraubenförmigen Kreuzlagen Wicklungen ein Rovingabschnitt mit geringerer Zugfestigkeit verwendet werden kann. Anders ausgedrückt, bei den schraubenförmigen Kreuzlagen Wicklungen würde ein Rovingabschnitt mit hoher Zugfestigkeit, der in der Regel auch höhere Materialkosten mit sich bringt, keinen oder nur einen vernachlässigbaren mechanischen Vorteil gegenüber einem weniger zugfesten, allgemein kostengünstigeren Rovingabschnitt mit sich bringen. Durch die entsprechende angepasste Auswahl des Rovingabschnitts an die jeweilige Wicklung können erhebliche Kostenersparnisse erzielt werden.

Bevorzugt wird der wenigstens eine Roving auf einen zylindrischen Mittelabschnitt des Innenmantels wenigstens teilweise ringförmig als Umfangslage gewickelt und auf Endabschnitte, die sich an den Mittelabschnitt anschließen, ausschließlich schraubenförmig als Kreuzlage gewickelt. Dieses Wickelmuster entspricht einer typischen zu erwartenden Belastung des Behälters. Der zylindrische Mittelabschnitt, der symmetrisch zu einer Mittelachse ist, die mit der Wickelachse während des Aufwickelns übereinstimmt, erfährt durch einen auftretenden Innendruck normalerweise nahezu ausschließlich eine Belastung in radialer Richtung, während die Endabschnitte auch eine Belastung in axialer Richtung erfahren.

Bevorzugt wird der wenigstens eine Roving mit den verschiedenen Rovingabschnitten auf einer Spule bereitgestellt und unter Abwickeln von dieser Spule zugeführt. D.h., der Roving liegt zunächst aufgewickelt auf einer Spule vor, also in einer Form, die auch bei herkömmlichen Rovings üblich ist. Das Zuführen erfolgt beim Herstellungsverfahren dann, indem der Roving zunächst von der Spule abgewickelt wird, also in einer Weise, die effizient ist und auch bei Herstellungsverfahren im Stand der Technik eingesetzt wird.

Es sind Ausgestaltungen der Erfindung denkbar, bei denen der Roving von vornherein mit den unterschiedlichen Rovingabschnitten hergestellt wird. Bevorzugt werden allerdings zum Bereitstellen des Rovings die unterschiedlichen Rovingabschnitte zuerst einzeln bereitgestellt und danach miteinander verbunden und auf die Spule aufgewickelt. D.h., es werden zunächst einzelne Rovingabschnitte bereitgestellt, von die jeder für sich betrachtet allgemein auch als Roving angesehen werden kann. Im Rahmen des erfindungsgemäßen Verfahrens kann sich das Bereitstellen der Rovingabschnitte auf ein Abschneiden bzw. Ablängen eines Abschnitts von einem vorgefertigten, z.B. handelsüblichen Roving beschränken. Die Rovingabschnitte werden danach miteinander verbunden, wodurch ein Roving mit unterschiedlichen Rovingabschnitten entsteht, und auf die Spule aufgewickelt wird. Dabei ist es möglich, dass ein Rovingabschnitt bereits teilweise auf die Spule aufgewickelt ist, wenn er mit einem nachfolgenden Rovingabschnitt verbunden wird.

Zur Verbindung der einzelnen Rovingabschnitte können unterschiedliche Verfahren eingesetzt werden, die unter Umständen auch von der Art der Fasern in den einzelnen Rovingabschnitten abhängen können. Insbesondere können die Rovingabschnitte verspleißt, verklammert und/oder stoffschlüssig verbunden werden. Eine stoffschlüssige Verbindung kann insbesondere durch einen geeigneten Klebstoff bzw. ein Bindemittel hergestellt werden, gegebenenfalls ist aber auch - je nach Art der jeweiligen Fasern - ein unmittelbares verschweißen der Rovingabschnitte miteinander denkbar.

Es kann (jeweils zu einem bestimmten Zeitpunkt) ein einzelner Roving auf den Innenmantel aufgewickelt werden. Darüber hinaus ist es allerdings auch möglich und vorgesehen, dass eine Mehrzahl von Rovings als Bündel auf den Innenmantel aufgewickelt werden, wobei die Abfolge der Rovingabschnitte in den einzelnen Rovings aufeinander abgestimmt ist. Dabei kann jeder der Rovings auf einer eigenen Spule bereitgestellt werden, von der er dann bei Bedarf abgewickelt wird. Das Abwickeln und Zuführen der einzelnen Rovings geschieht dann zeitlich parallel. Sie können bspw. mittels eines Fadenauges zu einem Bündel zusammengefasst und anschließend aufgewickelt werden. Das Bündel kann seinerseits auch als ein einziger assemblierter Roving angesehen werden. Damit die mechanischen Eigenschaften innerhalb des Bündels zueinander passen, ist die Abfolge der Rovingabschnitte in den einzelnen Rovings aufeinander abgestimmt, d.h. in dem Bündel liegen jeweils Rovingabschnitte mit gleichen Materialeigenschaften nebeneinander.

Weitere vorteilhafte Einzelheiten und Wirkungen der Erfindung sind im Folgenden näher erläutert. Es zeigen
- Fig. 1: eine Seitenansicht eines Druckbehälters;
- Fig. 2: zwei Spulen mit darauf aufgewickelten Rovings sowie zwei Rovingabschnitte;
- Fig. 3: die zwei Rovingabschnitte aus Fig. 2;
- Fig. 4: einen durch die Verbindung der zwei Rovingabschnitte aus Fig. 3 gebildeten Roving;
- Fig. 5: eine Spule, auf welche der Roving aus Fig. 4 aufgewickelt ist;
- Fig. 6: eine Anlage zur Herstellung des Druckbehälters aus Fig. 1; sowie
- Fig. 7: eine Schnittdarstellung des Druckbehälters.

In den unterschiedlichen Figuren sind gleiche Teile stets mit denselben Bezugszeichen versehen, weswegen diese in der Regel auch nur einmal beschrieben werden.

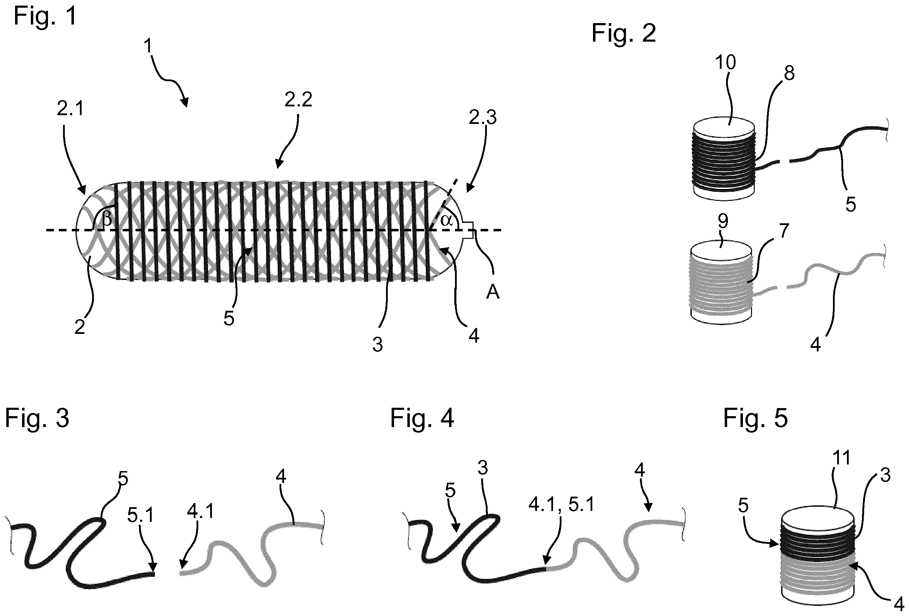

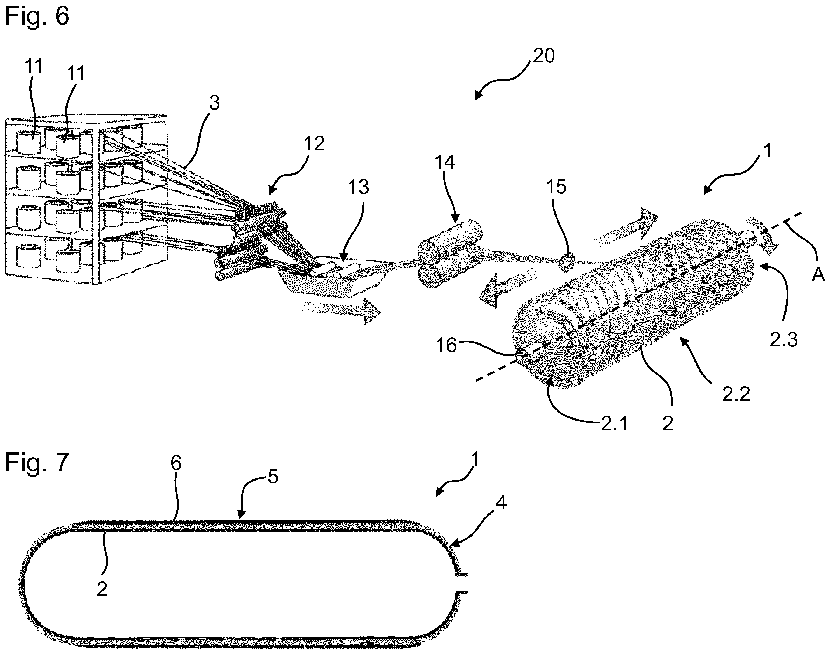

Fig. 1 zeigt eine Seitenansicht eines Druckbehälters 1, der bspw. als Behälter für Wasserstoff zum Betrieb einer Brennstoffzelle in einem Kraftfahrzeug vorgesehen sein kann. Der (auch in Fig. 6 und 7 dargestellte) Druckbehälter 1 weist einen rotationssymmetrischen Innenmantel 2 bspw. aus Metall oder Polymer auf, mit einem zylindrischen Mittelabschnitt 2.2 sowie sich beiderseits hieran anschließenden gewölbten Endabschnitten 2.1, 2.3. Der Innenmantel 2 ist zu schwach, um dem im Betriebszustand auftretenden Druck zu widerstehen, weshalb er durch einen (in Fig. 7 erkennbaren) Außenmantel 6 verstärkt wird. Dieser Außenmantel 6 besteht aus faserverstärktem Kunststoff. Zu seiner Herstellung wird wenigstens ein Roving 3 gemäß einem vorgesehenen Muster um den Innenmantel 2 gewickelt.

Der Roving 3 weist einen ersten Rovingabschnitt 4 auf, der Fasern mit geringerer Zugfestigkeit aufweist, sowie einen zweiten Rovingabschnitt 5, der Fasern mit höherer Zugfestigkeit aufweist. Zur besseren Unterscheidung ist der erste Rovingabschnitt 4 in den Figuren heller erscheinend dargestellt, während der zweite Rovingabschnitt 5 dunkler erscheinend dargestellt ist. Wie in Fig. 1 erkennbar, ist vorgesehen, dass der erste Rovingabschnitt 4 als Kreuzlage schraubenförmig um den Innenmantel 2 gewickelt wird, d.h. ein Wickelwinkel α des ersten Rovingabschnitts 4 gegenüber einer Mittelachse A des Innenmantels 2 (bzw. des Behälters 1) weicht deutlich von 90° ab und kann bspw. zwischen 30 und 60° liegen. Dabei ist der erste Rovingabschnitt 4 sowohl um den Mittelabschnitt 2.2 als auch um die Endabschnitte 2.1, 2.3 gewickelt. Demgegenüber ist der zweite Rovingabschnitt 5 als Umfangslage ringförmig bzw. ringartig ausschließlich um den Mittelabschnitt 2.2 gewickelt. Der Wickelwinkel β des zweiten Rovingabschnitt 5 gegenüber der Mittelachse A liegt im vorliegenden Fall bei ca. 85°. Durch die Kombination des großen Wickelwinkels und der Zugfestigkeit der Fasern des zweiten Rovingabschnitts 5 wird der Mittelabschnitt 2.2 in besonderem Maße gegen Innendruck stabilisiert. Demgegenüber ist für die Endabschnitte 2.1, 2.3 die Stabilisierung durch die als Kreuzlage schraubenförmig gewickelten, weniger zugfesten Fasern des ersten Rovingabschnitts 4 ausreichend. Da die weniger zugfesten Fasern im Allgemeinen kostengünstiger sind, lässt sich eine kostengünstige Fertigung des Druckbehälters 1 realisieren, ohne hierfür signifikante Nachteile hinsichtlich Qualität bzw. Betriebssicherheit in Kauf zu nehmen.

Im Rahmen des erfindungsgemäßen Herstellungsverfahrens ist nun vorgesehen, dass die beiden Rovingabschnitte 4, 5 als Teile eines einzigen, durchgehenden Rovings 3 realisiert werden, der gewissermaßen kontinuierlich um den Innenmantel 2 gewickelt werden kann. Hierzu kann zunächst das in Fig. 1 gezeigte Wickelmuster simuliert werden und auf Basis desselben die notwendige Länge des ersten Rovingabschnitts 4 und des zweiten Rovingabschnitts 5 ermittelt werden. Der Einfachheit halber sind in diesem Ausführungsbeispiel lediglich zwei Rovingabschnitte 4, 5 gezeigt, die im Wesentlichen in zwei Schichten auf den Innenmantel 2 aufgewickelt werden. Selbstverständlich sind auch mehr als zwei Rovingabschnitte und mehr als zwei Schichten möglich.

Basierend auf den ermittelten Längen werden dann von einem ersten Roving 7, der die mechanischen Eigenschaften des ersten Rovingabschnitts 4 aufweist, sowie einem zweiten Roving 8, der die mechanischen Eigenschaften des zweiten Rovingabschnitts 5 aufweist, die Rovingabschnitte 4, 5 mit den vorgesehenen Längen abgelängt, wie in Fig.2 angedeutet. Der erste und zweite Roving 7, 8 können in handelsüblicher Form jeweils auf einer Spule 9, 10 bezogen werden. Die in Fig. 3 nochmals dargestellten Rovingabschnitte 4, 5 werden an ihren Enden 4.1, 5.1 miteinander verbunden, wodurch der Roving 3 gebildet wird, wie in Fig. 4 dargestellt. Die Verbindung der Rovingabschnitte 4, 5 kann bspw. durch Spleißen, Klammern und/oder einen Stoffschluss hergestellt werden.

Der so gebildete Roving 3 wird wiederum auf eine Spule 11 aufgewickelt, wie in Fig. 5 dargestellt. Die gezeigte Verteilung der Rovingabschnitte 4, 5 auf der Spule 11 dient dabei der Anschauung und weicht im Allgemeinen von der tatsächlichen Verteilung ab.

Der fertiggestellte und auf die Spule 11 gewickelte Roving 3 kann nunmehr in einer an sich bekannten, in Fig. 6 dargestellten Fertigungsanlage 20 verwendet werden, um auf den Innenmantel 2 aufgewickelt zu werden. In diesem Fall werden eine Mehrzahl von Rovings 3 in einem Bündel zusammengefasst und gemeinsam auf den Innenmantel 2 aufgewickelt. Alternativ wäre auch denkbar, dass ein einzelner Roving 3 aufgewickelt wird. Im Falle mehrerer gebündelter Rovings 3 muss die Abfolge der Rovingabschnitte 4, 5 in den einzelnen Rovings 3 aufeinander abgestimmt sein, d.h. es müssen gleichartige Rovingabschnitte 4, 5 nebeneinanderliegen. Nach dem Abspulen werden die Rovings 3 zunächst durch eine Reihe von Kämmen 12 geführt, bevor sie ein Bad mit Bindemittel 13 (normalerweise Harz) durchlaufen und dort mit Bindemittel 13 getränkt werden.

Nach Durchlaufen eines Walzenpaars 14 werden die Rovings 3 durch ein Fadenauge 15 geführt, das - wie durch die Pfeile angedeutet - parallel zur Mittelachse A (die identisch mit einer Wickelachse ist) verstellbar ist. Über das Fadenauge 15 laufen die Rovings 3 zu dem auf einer Drehvorrichtung 16 aufgenommenen Innenmantel 2, um auf diesen aufgewickelt zu werden. Durch das Verfahren des Fadenauges 15 sowie der Drehgeschwindigkeit wird der jeweilige Wickelwinkel eingestellt. Da die Länge der beiden Rovingabschnitte 4, 5 auf das vorgesehene Wickelmuster abgestimmt wurden, muss dieses lediglich durch Rotation der Drehvorrichtung 16 und Verstellen des Fadenauges 15 durchfahren werden, wobei beim Übergang von der schraubenförmigen Kreuzlagen-Wicklung zur ringförmigen Umfangslagen-Wicklung im richtigen Zeitpunkt der Übergang vom ersten Rovingabschnitt 4 zum zweiten Rovingabschnitt 5 erfolgt. Es ist hierfür kein Anhalten der Fertigungsanlage 20 oder ein Austauschen der Spulen 11 notwendig. Daher arbeitet das Fertigungsverfahren besonders schnell und effizient.

Nach dem vollständigen Aufwickeln des bzw. der Rovings 3 auf den Innenmantel 2 wird das Bindemittel 13 ausgehärtet, wodurch ein Außenmantel 6 aus Faserverbundstoff gebildet wird, der den Innenmantel 2 außenseitig verstärkt. Dieser Zustand ist in der Schnittdarstellung von Fig. 7 gezeigt.

### Bezugszeichenliste:

- 1: Druckbehälter
- 2: Innenmantel
- 2.1, 2.3: Endabschnitt
- 2.2: Mittelabschnitt
- 3, 7, 8: Roving
- 4, 5: Rovingabschnitt
- 4.1, 5.1: Ende
- 6: Außenmantel
- 9, 10, 11: Spule
- 12: Kamm
- 13: Bindemittel
- 14: Walze
- 15: Fadenauge
- 16: Drehvorrichtung
- 20: Fertigungsanlage
- A: Mittelachse

## Patentansprüche

1. Herstellungsverfahren für einen faserverstärkten Behälter (1), umfassend zumindest die Schritte:
- Bereitstellen eines Innenmantels (2) des Behälters (1),
- Zuführen und Aufwickeln wenigstens eines Rovings (3) auf den Innenmantel (2), wobei aufeinander folgend wenigstens zwei Rovingabschnitte (4, 5) mit unterschiedlichen mechanischen Eigenschaften aufgewickelt werden, sowie
- Anbinden des wenigstens einen Rovings (3) an den Innenmantel (2) zur Herstellung eines Außenmantels (6) aus Faserverbundstoff,
**dadurch gekennzeichnet, dass**
wenigstens zwei Rovingabschnitte (4, 5) als aufeinander folgende, miteinander verbundene Teile eines Rovings (3) aufgewickelt werden.

2. Herstellungsverfahren nach Anspruch 1,
**dadurch gekennzeichnet, dass**
der wenigstens eine Roving (3) vor dem Aufwickeln mit einem Bindemittel (13) getränkt wird, wobei das Anbinden an den Innenmantel (2) durch Aushärten des Bindemittels (13) erfolgt.

3. Herstellungsverfahren nach Anspruch 1 oder 2,
**dadurch gekennzeichnet, dass**
wenigstens zwei Rovingabschnitte (4, 5) unterschiedliche Zugeigenschaften aufweisen.

4. Herstellungsverfahren nach einem der vorherigen Ansprüche,
**dadurch gekennzeichnet, dass**
wenigstens zwei Rovingabschnitte (4, 5) derart aufgewickelt werden, dass ihre Wickelwinkel (α, β) wenigstens überwiegend voneinander getrennten Winkelbereichen entsprechen.

5. Herstellungsverfahren nach Anspruch 4,
**dadurch gekennzeichnet, dass**
wenigstens ein Rovingabschnitt (4) mit geringerer Zugfestigkeit wenigstens überwiegend schraubenförmig als Kreuzlage gewickelt wird, während wenigstens ein Rovingabschnitt (5) mit höherer Zugfestigkeit wenigstens überwiegend ringförmig als Umfangslage gewickelt wird.

6. Herstellungsverfahren nach einem der vorherigen Ansprüche,
**dadurch gekennzeichnet, dass**
der wenigstens ein Roving (3) auf einen zylindrischen Mittelabschnitt (2.2) des Innenmantels (2) wenigstens teilweise ringförmig als Umfangslage gewickelt wird und auf Endabschnitte (2.1, 2.3), die sich an den Mittelabschnitt (2.2) anschließen, ausschließlich schraubenförmig als Kreuzlage gewickelt wird.

7. Herstellungsverfahren nach einem der vorherigen Ansprüche,
**dadurch gekennzeichnet, dass**
der wenigstens eine Roving (3) mit den verschiedenen Rovingabschnitten (4, 5) auf einer Spule (11) bereitgestellt und unter Abwickeln von dieser Spule (11) zugeführt wird.

8. Herstellungsverfahren nach einem der vorherigen Ansprüche,
**dadurch gekennzeichnet, dass**
zum Bereitstellen des Rovings (3) die unterschiedlichen Rovingabschnitte (4, 5) zuerst einzeln hergestellt und danach miteinander verbunden und auf die Spule (11) aufgewickelt werden.

9. Herstellungsverfahren nach Anspruch 8,
**dadurch gekennzeichnet, dass**
die Rovingabschnitte (4, 5) verspleißt, verklammert und/oder stoffschlüssig verbunden werden.

10. Herstellungsverfahren nach einem der vorherigen Ansprüche,
**dadurch gekennzeichnet, dass**
eine Mehrzahl von Rovings (3) als Bündel auf den Innenmantel (2) aufgewickelt werden, wobei die Abfolge der Rovingabschnitte (4, 5) in den einzelnen Rovings (3) aufeinander abgestimmt ist.

## Claims

1. Production method for a fiber-reinforced vessel (1), comprising at least the steps:
- providing an internal jacket (2) of the vessel (1);
- feeding and winding at least one roving (3) onto the internal jacket (2), wherein at least two roving portions (4, 5) having dissimilar mechanical properties are successively wound; as well as
- linking the at least one roving (3) to the internal jacket (2) for producing an external jacket (6) from fiber-composite material,
**characterized in that**
at least two roving portions (4, 5) are wound as successive, interconnected parts of a roving (3).

2. Production method according to Claim 1,
**characterized in that**
the at least one roving (3) prior to winding is soaked with a binding agent (13), wherein the linking to the internal jacket (2) is performed by curing the binding agent (13).

3. Production method according to Claim 1 or 2,
**characterized in that**
at least two roving portions (4, 5) have dissimilar tensile properties.

4. Production method according to one of the preceding claims,
**characterized in that**
at least two roving portions (4, 5) are wound in such a manner that the winding angles (α, β) of said roving portions (4, 5) at least predominantly correspond to mutually separate angular ranges.

5. Production method according to Claim 4,
**characterized in that**
at least one roving portion (4) having a lower tensile strength is at least predominantly wound helically as a cross-wound tier, while at least one roving portion (5) having a higher tensile strength is at least predominantly wound annularly as a circumferential tier.

6. Production method according to one of the preceding claims,
**characterized in that**
the at least one roving (3) is at least partially wound annularly as a circumferential tier onto a cylindrical central portion (2.2) of the internal jacket (2) and is exclusively wound helically as a cross-wound tier onto end portions (2.1, 2.3) which adjoin the central portion (2.2) .

7. Production method according to one of the preceding claims,
**characterized in that**
the at least one roving (3) having the dissimilar roving portions (4, 5) is provided on one bobbin (11) and is fed by unwinding from said bobbin (11).

8. Production method according to one of the preceding claims,
**characterized in that**
for providing the roving (3), the dissimilar roving portions (4, 5) are first individually produced and thereafter connected to one another and wound onto the bobbin (11).

9. Production method according to Claim 8,
**characterized in that**
the roving portions (4, 5) are spliced, clamped, and/or connected in a materially integral manner.

10. Production method according to one of the preceding claims,
**characterized in that**
a plurality of rovings (3) are wound as a bundle onto the internal jacket (2), wherein the roving portions (4, 5) in terms of the sequence thereof in the individual rovings (3) are mutually adapted.

## Revendications

1. Procédé de fabrication pour un récipient renforcé par des fibres (1), comprenant au moins les étapes suivantes :
- la fourniture d'une enveloppe intérieure (2) du récipient (1),
- l'alimentation et l'enroulement d'au moins un roving (3) sur l'enveloppe intérieure (2), au moins deux portions de roving (4, 5) successives étant enroulées avec des propriétés mécaniques différentes, et
- la liaison de l'au moins un roving (3) à l'enveloppe intérieure (2) pour produire une enveloppe extérieure (6) constituée de matériau composite renforcé par des fibres,
**caractérisé en ce**
**qu'**au moins deux portions de roving (4, 5) sont enroulées en tant que parties successives d'un roving (3) connectées l'une à l'autre.

2. Procédé de fabrication selon la revendication 1,
**caractérisé en ce que**
l'au moins un roving (3) est imprégné avec un liant (13) avant l'enroulement, la liaison à l'enveloppe intérieure (2) s'effectuant par durcissement du liant (13).

3. Procédé de fabrication selon la revendication 1 ou 2,
**caractérisé en ce**
**qu'**au moins deux portions de roving (4, 5) présentent des propriétés de traction différentes.

4. Procédé de fabrication selon l'une quelconque des revendications précédentes,
**caractérisé en ce**
**qu'**au moins deux portions de roving (4, 5) sont enroulées de telle sorte que leurs angles d'enroulement (α, β) correspondent essentiellement à des plages angulaires séparées l'une de l'autre.

5. Procédé de fabrication selon la revendication 4,
**caractérisé en ce**
**qu'**au moins une portion de roving (4) est enroulée avec une faible résistance à la traction au moins essentiellement sous forme hélicoïdale en tant que couche croisée tandis qu'au moins une portion de roving (5) est enroulée avec une plus grande résistance à la traction au moins essentiellement sous forme annulaire en tant que couche périphérique.

6. Procédé de fabrication selon l'une quelconque des revendications précédentes,
**caractérisé en ce que**
l'au moins un roving (3) est enroulé sur une portion centrale cylindrique (2.2) de l'enveloppe intérieure (2) au moins en partie sous forme annulaire en tant que couche périphérique et est enroulé exclusivement sous forme hélicoïdale en tant que couche croisée au niveau de portions d'extrémité (2.1, 2.3) qui se raccordent à la portion centrale (2.2).

7. Procédé de fabrication selon l'une quelconque des revendications précédentes,
**caractérisé en ce que**
l'au moins un roving (3) est fourni avec les différentes portions de roving (4, 5) sur une bobine (11) et est acheminé par déroulement de cette bobine (11).

8. Procédé de fabrication selon l'une quelconque des revendications précédentes,
**caractérisé en ce que**
pour la fourniture du roving (3), les différentes portions de roving (4, 5) sont d'abord fabriquées individuellement et sont ensuite liées les unes aux autres et sont enroulées sur la bobine (11).

9. Procédé de fabrication selon la revendication 8,
**caractérisé en ce que**
les portions de roving (4, 5) sont épissurées, agrafées et/ou connectées par liaison de matière.

10. Procédé de fabrication selon l'une quelconque des revendications précédentes,
**caractérisé en ce**
**qu'**une pluralité de rovings (3) sont enroulés sous forme de faisceau sur l'enveloppe intérieure (2), la succession des portions rovings (4, 5) étant ajustées les unes aux autres dans les rovings (3) individuels.
